# EUROPÄISCHE PATENTSCHRIFT

(11) **EP 1 357 096 B1**
(45) Veröffentlichungstag und Bekanntmachung des Hinweises auf die Patenterteilung: **24.08.2005**
(21) Anmeldenummer: 03008441.2
(22) Anmeldetag: 11.04.2003
(51) Int. Cl.: C04B 35/52, F27D 11/04

(54) **Verfahren und Anlage zum Graphitieren von Kohlenstoffkörpern**
Method and apparatus for graphitizing carbon bodies
Procédé et appareil pour la graphitisation de corps en carbone

(30) Priorität: 16.04.2002 AT 5832002
(43) Veröffentlichungstag der Anmeldung: 29.10.2003
(73) Patentinhaber: SGL Carbon GmbH & Co., 4823 Steeg/Hallstätter See (AT)
(72) Erfinder: Daimer, Johann, Dr., 64546 Mörfelden-Walldorf (DE); Gschwandtner, Stefan, 5351 Aigen-Voglhub (AT); Kalchschmid, Franz, Dr., 4830 Hallstatt (AT); Kals, Franz, 4823 Steeg (AT); Lhotzky, Walter, 4823 Steeg (AT); Liebhart, Franz, 4822 Bad Goisem (AT); Putz, Gerhard, 4822 Bad Goisem (AT); Putz, Hubert, 4822 Bad Goisem (AT)

(56) Entgegenhaltungen:
- DE-A- 2 457 923
- US-A- 4 394 766
- US-A- 5 299 225

## Beschreibung

Die Erfindung betrifft ein Verfahren zum Nachverkoken und Graphitieren von mit Pech imprägnierten Kohlenstoffkörpern in einem Verfahrensschritt. Die Erfindung betrifft auch eine für das vorgenannte Verfahren geeignete, weitgehend gasdicht abschließbare Ofenwanne eines Längsgraphitierungsofens nach Castner zum Durchführen des vorgenannten Verfahrens.

Die Herstellung von graphitierten Kohlenstoffkörpern ist eine inzwischen seit über einhundert Jahren beherrschte Technik, die im industriellen Maßstab großtechnisch angewandt wird und deshalb in vielen Punkten ausgefeilt und bezüglich der Kosten optimiert ist. Eine der Beschreibungen dieser Technik findet man in ULLMANN'S ENCYCLOPEDIA OF INDUSTRIAL CHEMISTRY, Vol. A5, VCH Verlagsgesellschaft mbh, Weinheim,1986, S. 103 bis 113.

Ein auffälliges Merkmal dieser Technik ist die mehrfache Nachimprägnierung und Nachverkokung von Kohlenstoffkörpern. Diese Verfahrensschritte sind notwendig, weil die graphitierten Kohlenstoffkörper eine Mindest-Dichte, -Festigkeit und -Leitfähigkeit aufweisen müssen, um den Anforderungen in der Anwendung der graphitierten Kohlenstoffkörper zu genügen. Diese Verfahrensschritte sind mit einer kostenträchtigen Handhabung der Kohlenstoffkörper verbunden, das heißt, die Kohlenstoffkörper müssen mehrfach in Imprägnierautoklaven eingesetzt werden, entnommen werden, in Verkokungsöfen eingesetzt und wieder entnommen werden.

Es hat daher nicht an Versuchen gefehlt, die Verfahrensschritte zusammenzufassen, einen oder mehrere dieser Verfahrensschritte durch veränderte Rohstoffe, durch veränderte Rezepturen der Rohstoffmischungen oder durch optimierte Techniken bei der "Grünfertigung" entfallen zu lassen.

Ein anderer Versuch mit weniger Verfahrensschritten auszukommen, bestand darin, das letzte Nachverkoken mit der abschließenden Graphitierung zusammenzufassen. Es sind aus den zurückliegenden Jahrzehnten Versuche mit Achesonöfen bekannt. Diese sogenannte "Quergraphitierung" ist weniger wirtschaftlich als die heute weit verbreitete "Längsgraphitierung", bei der die Kohlenstoffkörper so in den Öfen angeordnet sind, dass der elektrische Strom direkt durch die Kohlenstoffkörper parallel zu ihrer Längsachse fließt. Man hat also nachimprägnierte Kohlenstoffkörper in Quergraphiterungsöfen eingebaut und dann versucht, das Nachbrennen und Graphitieren in einem Verfahrensschritt bzw. in einer Ofenreise mit nur einem Einbau der nachimprägnierten Kohlenstoffkörper und einem Ausbau der dann graphitierten Kohlenstoffkörper zu erreichen.
Unter dem Begriff "Ofenreise" ist auch bei der weiteren Verwendung Folgendes zu verstehen: Es werden nachimprägnierte oder nicht imprägnierte Kohlenstoffkörper in einen Graphitierungsofen eingesetzt und mit einer thermisch isolierenden Schüttung aus vorzugsweise Koks umgeben. Mittels direktem Stromdurchgang durch die Schüttung und durch die Kohlenstoffkörper werden diese erhitzt, wobei das Aufheizen von Raumtemperatur bis zur Graphitierungstemperatur (bis zu 3000°C) mit einem vorgegebenen Temperatur-Zeit-Programm erfolgt. Die Spitzentemperatur kann für eine kurze Zeit gehalten werden. Es folgt die Abschaltung des Stromes und damit die Abkühlung des gesamten Ofens, die je nach Gesamtmasse der Kohlenstoffkörper, der Schüttung und der Ofenbauteile mehrere Tage in Anspruch nehmen kann.

In der deutschen Offenlegungsschrift 24 57 923 wird ein Längsgraphitierungsofen beschrieben, in dem die Kohlenstoffelektroden ohne eine umgebende Isolierschüttung als Strang graphitiert werden. Insofern handelt es sich bei diesem Ofen nicht um einen Längsgraphitierungsofen nach Castner. Damit die Elektroden während der thermischen Behandlung nicht vom Sauerstoff der Luft angegriffen werden, wird der Elektrodenstrang von wassergekühlten, innen mit Graphitfilz belegten, schalenförmigen Wänden umgeben und der Hohlraum zwischen dem Elektrodenstrang und den Wänden mit Schutzgas gespült. Die Lehre dieser Schrift gibt nicht an, dass (nach-)imprägnierte Kohlenstoffkörper in den Ofen eingesetzt werden; vielmehr wird von "Kohlenstoffkörpern", siehe Seite 6, 1. Absatz, 4. und 9. Zeile sowie 3. Absatz, 1. Zeile, also von carbonisiertem Kohlenstoff gesprochen, der während der thermischen Behandlung sehr wenig Schwel- oder Spaltgase abgibt. Für diesen speziellen Ofentyp wird das Nachbrennen und Graphitieren in einem Verfahrensschritt nicht gelehrt.

Die Patentschrift US 5,299,225 gibt eine Lehre für einen Längsgraphitierungsofen nach Heroult bzw. Castner, bei dem ein Strang von Kohlenstoffelektroden während der thermischen Behandlung von einer Isolierschüttung aus Kokskömem umgeben ist. Der Strang von Kohlenstoffelektroden und die umgebende Isolierschüttung aus Kokskörnern befinden sich nach der Lehre dieser Schrift in einer relativ gasdichten Wanne aus metallischen und keramischen Komponenten, siehe Spalte 2, Zeilen 40 bis 45, die von einer Haube überdeckt ist. Mit dieser Einrichtung können während der thermischen Behandlung entstehende Schwel- oder Spaltgase leicht aufgefangen und entsorgt werden. Es wird in dieser Schrift jedoch nicht gelehrt, dass das Nachbrennen und Graphitieren in einem Verfahrensschritt durchgeführt wird.

Ein Verfahren zur Zusammenfassung von Nachbrennen und Graphitieren ist in der Schrift DE 22 24 905 beschrieben. Danach werden die quer zum Stromfluss orientierten Kohlenstoffkörper in mehreren Lagen übereinander in den Ofen eingebaut. Die unteren Lagen bestehen aus mit Pech nachimprägnierten Kohlenstoffkörpern, die oberen Lagen aus nicht imprägnierten Kohlenstoffkörpern. Auf diese Weise wurde zum einen die in den Ofen eingebrachte Pechmenge vermindert. Zum anderen wurde mit dieser Anordnung der Kohlenstoffkörper die Temperaturverteilung im Ofen während der Ofenreise günstig beeinflusst. Es stellte sich nämlich im oberen Teil des Ofens eine höhere Temperatur ein, die eine weitere Zersetzung zu weniger problematischen Gasen der im unteren Ofenteil aus dem Pech entstandenen problematischen Spaltgase bewirkte. Dieses Verfahren hat sich in der Praxis nicht durchgesetzt und ist letztlich an den entstehenden Spaltgasen gescheitert. Dies ist wie folgt zu verstehen:

Verkokte Kohlenstoffkörper weisen eine erhebliche Porosität in der Größenordnung von 20 bis 25 Volumenprozent nach dem Erstbrand auf. Die Poren werden beim (Nach-)-Imprägnieren mit Pech gefüllt. Wenn man (nach-)imprägnierte Kohlenstoffkörper in größeren Mengen von z.B. einigen zehn Tonnen in einen Achesonofen einbaut, bringt man auch einige Tonnen Imprägnierpech mit in den Ofen. Beim Aufheizen der (nach-)imprägnierten Kohlenstoffkörper wird das Pech zunächst weich, dann flüssig, bis es sich bei weiter steigenden Temperaturen zersetzt. Es entstehen aus dem Imprägnierpech fester Kohlenstoff (Koks) und flüchtige Spaltgase, die sich aus einem außerordentlich breiten Spektrum von Kohlenwasserstoffverbindungen zusammensetzen, beginnend bei hochmolekularen Teeren und Ölen und endend bei niedermolekularen Verbindungen wie CH₄ oder CO. Bei niedrigen Aufheizgeschwindigkeiten entstehen pro Zeiteinheit aus dem Imprägnierpech geringe Volumina flüchtiger Spaltgase, bei hohen Aufheizgeschwindigkeiten große Volumina.

In Graphitierungsöfen werden sehr hohe Endtemperaturen von z.B. 3000°C in vergleichsweise kurzen Zeiten von z.B. 15 bis 25 Stunden erreicht, das bedeutet hohe Aufheizgeschwindigkeiten. Zum Vergleich werden in Verkokungsöfen Endtemperaturen von z.B. 1000°C in vergleichsweise langen Zeiten von z.B. sieben Tagen erreicht. Die hohe Aufheizgeschwindigkeit bewirkt in ungünstiger Weise die Entstehung von außerordentlich großen Mengen flüchtiger Spaltgase aus dem Imprägnierpech. Mit diesen unerwünschten Gasen werden die Graphitierungsanlage, das umgebende Gebäude und auch die Umwelt unmäßig belastet, daher ist eine Fertigung nach diesem Verfahren nicht tunlich.

Es bestand daher die Aufgabe, bei der Herstellung von graphitierten Kohlenstoffkörpern die Verfahrensschritte Nachverkoken und Graphitieren in einem Verfahrensschritt zusammenzufassen und einen dafür geeigneten moderneren und wirtschaftlich arbeitenden Graphitierungsofen bereitzustellen. Eine weitere Aufgabe war es, die wichtigen Einheiten des Ofens wie Ofenköpfe, Wanne und Abdeckung so gasdicht auszuführen, dass gegenüber dem umgebenden Luftdruck eine Gasdruckänderung im Ofen im Bereich von +10Pa bis zu -40Pa dauerhaft aufrecht erhalten werden kann.

Mit einer solchen Anlage und deren Verwendung erreicht man einerseits, dass die Kohlenstoffkörper statt zwei getrennte Verfahrensschritte (zunächst Nachbrennen und dann Graphitieren) nur eine Ofenreise durchlaufen und damit weniger Handhabung der gesamten hergestellten Tonnage an graphitierten Kohlenstoffkörpern notwendig ist. Andererseits werden mit dem abgedichteten Nachverkokungs- und Graphitierungsofen die aus dem Imprägnierpech entstehenden Spaltgase aufgefangen und die Umwelt nicht unzulässig belastet.

Die Aufgabe wird mit einem Verfahren gemäß dem kennzeichnenden Teil des Patentanspruchs 1 und mit einer Ofenwanne für einen Graphitierungsofen gemäß dem kennzeichnenden Teil des Patentanspruchs 8 gelöst. Die Verfahrenstemperaturen verlangen, dass für die Zusammenfassung der beiden Verfahrensschritte Nachbrennen und Graphitieren nicht etwa Verkokungsöfen genutzt werden, denn letztere würden die hohen Temperaturen beim Graphitieren nicht aushalten, sondern es werden Graphitierungsöfen genutzt bei denen die Verkokungstemperaturen nur eine Zwischenstufe vor Erreichen der Graphitierungstemperaturen darstellen. Entsprechend wurde zum Stand der Technik erläutert, dass zum Nachverkoken und Graphitieren in einem Achesonofen Versuche durchgeführt und Verfahren beschrieben wurden. Für die Lösung der vorliegenden Aufgabe wurde statt des Graphitierungsofens nach Acheson ein modernerer und wirtschaftlich arbeitender Graphitierungsofen nach Castner ausgewählt. Mit einem solchen Ofen wurden Nachverkoken und Graphitieren in einem Verfahrensschritt bzw. in einer Ofenreise realisiert.

Längsgraphitierungsöfen nach Castner haben zwei Ofenköpfe, ein dazwischen liegendes langgestrecktes Ofenbett aus einer Koksschüttung auf dem die zu graphitierenden Kohlenstoffkörper angeordnet sind, die wiederum mit einer Koksschüttung zwecks Isolierung abgedeckt werden. Bei einer solchen offenen, meilerartigen Anordnung können Druck und Zusammensetzung der Atmosphäre über dieser offenen Anlage nach Castner nicht geregelt werden. Eine Regelung der Ofenatmosphäre gelingt nur dann, wenn der Ofen weitgehend abgeschlossen ist. Erfindungsgemäß ist der Graphitierungsofen nach Castner so gasdicht, dass gegenüber dem umgebenden Luftdruck eine Gasdruckänderung im Ofen im Bereich von +10Pa bis zu -40Pa dauerhaft aufrecht erhalten werden kann.

Erfindungsgemäß hat der Graphitierungsofen nach Castner eine so gasdichte Wanne aus gefügten keramischen, betonartigen oder metallischen Werkstoffen oder aus einer Kombination dieser Werkstoffe einschließlich der Abdeckung, dass gegenüber dem umgebenden Luftdruck eine Gasdruckänderung im Ofen im Bereich von +10Pa bis zu -40Pa dauerhaft aufrecht erhalten werden kann.

Die beträchtlichen Temperaturänderungen im Ofen verursachen nach vielen Ofenreisen Risse oder Verwerfungen in der Wanne, wenn diese aus einem keramischen Mauerwerk besteht. Solche gerissenen oder verworfenen Wannen lassen sich nur schwer wieder in eine weitgehend gasdichte Verfassung bringen. Ein Neubau des Ofens mit dichter Wanne wäre notwendig.
In der Literatur sind Wannen für Graphitierungsöfen beschrieben, die nur aus metallischen, vorzugsweise Stahlblech-Elementen bestehen. Diese haben jedoch wie im Falle der Internationalen Anmeldung WO 87/06685 dargestellt, nicht die Aufgabe, ein weitgehend gasdichtes Behältnis für den Graphitierungsvorgang bereitzustellen, sondern es soll das gesamte Ofenbett leicht verfahrbar sei. Bei solchen "normalen" Graphitierungsöfen besteht auch nicht die Aufgabe, größeren Mengen von Spaltgasen abzuführen, weil die Kohlenstoffkörper im verkokten, nicht imprägnierten Zustand in den Ofen eingesetzt werden.
Im Gegensatz zur Anlage nach WO 87/06685 brachte eine Kombination von Betonelementen und metallischen Elementen die erfindungsgemäße Lösung der hier gestellten Aufgabe. Der Graphitierungsofen nach Castner enthält eine erfindungsgemäße, so gasdichte Wanne aus entlang der Länge des Graphitierungsofens angeordneten Baugruppen bestehend aus jeweils einem Stahlblechelement, einem Stahlblechkompensator und einer elektrisch isolierenden Betonrippe, dass gegenüber dem umgebenden Luftdruck eine Gasdruckänderung im Ofen im Bereich von +10Pa bis zu -40Pa dauerhaft aufrecht erhalten werden kann.

Die in einem heißen Graphitierungsofen entstehenden Spaltgase treten nach allen Seiten aus einem meilerartigen Aufbau des Ofens aus, sieht man von den dichten Stirnseiten der Ofenköpfe ab, in denen sich auch die elektrische Kontaktierung zu den Kohlenstoffkörpern im Ofen befindet. Wenn der Graphitierungsofen nun erfindungsgemäß mit einer in der beschriebenen Weise gasdichten Wanne ausgerüstet ist, so können die Spaltgase nur noch nach oben austreten. Um die Spaltgase nicht in die Umwelt entweichen zu lassen, hat der erfindungsgemäße Graphitierungsofen nach Castner eine so gasdichte, wärmeisolierte Stahlblech-Abdeckung, dass gegenüber dem umgebenden Luftdruck eine Gasdruckänderung im Ofen im Bereich von +10Pa bis zu -40Pa dauerhaft aufrecht erhalten werden kann. Die wärmeisolierte Stahlblech-Abdeckung gestattet es, entstehende Spaltgase aus den imprägnierten Kohlenstoffkörpern bei einem Gasdruck im Ofen im Bereich von +10Pa bis zu -40Pa aufzufangen und abzuführen.

Während der Aufheizphase sind die Kohlenstoffkörper in einem Graphitierungsofen nach Castner stromdurchflossen. Wegen der elektrisch leitenden Verbindung zu der die Kohlenstoffkörper umgebenden Koksschüttung bleibt es nicht aus, dass auch diese gemäß ihrem jeweiligen elektrischen Widerstand stromdurchflossen ist. Die aus den Stahlblechelementen bestehende Wanne des erfindungsgemäßen Ofens wäre ebenfalls in unzulässig hoher Weise stromdurchflossen, wenn nicht zwischen den Stahlblechelementen und den Stahlblechkompensatoren elektrisch isolierende Betonrippen angeordnet wären. Dieselben Überlegungen gelten natürlich auch für die Stahlblech-Abdeckung für den ganzen Ofen. Auch sie muss gegenüber der Koksschüttung und den Stahlblechelementen mit den Stahlblechkompensatoren elektrisch isoliert sein. Das gelingt in dem der Graphitierungsofen nach Castner eine auf dem oberen Wannenrand aufsitzende Abdeckung und eine Wanne hat, die mit Hilfe von Mineralwolle jeweils für eine Ofenreise elektrisch gegeneinander isoliert sind. Gleichzeitig hat die Mineralwolle die Wirkung, dass die Wanne und die Abdeckung so gasdicht gegeneinander abgedichtet sind, dass gegenüber dem umgebenden Luftdruck eine Gasdruckänderung im Ofen im Bereich von +10Pa bis
zu -40Pa dauerhaft aufrecht erhalten werden kann.

Die einzelnen Schritte vom Einsetzen der Kohlenstoffkörper in den Graphitierungsofen bis zu deren Entnahme aus dem Graphitierungsofen sind wie folgt:
- Einsetzen der imprägnierten Kohlenstoffkörper in einen Graphitierungsofen nach Castner,
- Aufheizen der imprägnierten Kohlenstoffkörper in einer Ofenreise mit einem einstellbaren Temperaturprogramm von Umgebungstemperatur auf die üblichen (Nach)Verkokungstemperaturen von 800 bis 1200°C bis auf Graphitierungstemperatur,
- Auffangen und Abführen der dabei entstehenden Spaltgase bei einem Gasüber- oder Gasunterdruck von +10 Pa bis zu -40 Pa gegenüber dem umgebenden Luftdruck unter einer Abdeckung über dem Graphitierungsofen nach Castner,
- Abkühlen der so entstandenen graphitierten Kohlenstoffkörper und
- Ausbauen dieser aus dem Graphitierungsofen.

Bei der Erörterung des Standes der Technik wurden die beim Aufheizen der imprägnierten Kohlenstoffkörper entstehenden Spaltgase behandelt. Es wurde dargestellt, dass die Menge der entstehenden Spaltgase von der Aufheizgeschwindigkeit der imprägnierten Kohlenstoffkörper abhängt.
Eine andere wichtige Größe ist die absolute Menge der imprägnierten Kohlenstoffkörper im Ofen. Vergleicht man einen Achesonofen mit einem Ofen nach Castner mit gleichem Abstand der Ofenköpfe, so kann man als Faustformel angeben, dass ein Achesonofen etwa die zwei- bis dreifache Menge an Kohlenstoffkörpern aufnehmen kann, wie ein Ofen nach Castner. Das bedeutet, bezogen auf die mit den Kohlenstoffkörpern in den Ofen eingebrachte Pechmenge, dass ein voll besetzter Ofen nach Castner nur etwa die Hälfte bis ein Drittel der Pechmenge wie ein Achesonofen enthält. Dies ist für die Menge der - während einer Ofenreise des erfindungsgemäßen Ofens - entstehenden Spaltgase als günstig anzusehen. Die Art des Peches beeinflusst die Menge der entstehenden Spaltgase nur geringfügig, da die Pechzusammensetzung der Imprägnierpeche wenig variiert. Die beiden Variablen " Aufheizgeschwindigkeit" und "absolute Pechmenge im Ofen" sind entscheidend für die pro Zeiteinheit während der Ofenreise entstehenden Volumina von Spaltgasen. Die Abfuhr dieser Volumina hängt von der Bauweise und dem Betrieb des Ofens ab.

Solange die Abdeckhaube auf dem Graphitierungsofen nach Castner im Einsatz ist, wird unter anderem mit Hilfe einer Absaugung der Gasdruck im gesamten Ofen geregelt.

Gegenüber dem umgebenden Luftdruck herrscht im Ofen ein Gasüberdruck von bis zu +10Pa oder ein Gasunterdruck von bis zu -40Pa, bevorzugt sind es +5Pa bis -25Pa. Auch bei einem Gasüberdruck von 10 Pa ist der Ofen in technisch ausreichendem Maße dicht, so dass er keinen Rauch oder Dämpfe nach außen abgibt. Die Gasdrücke ändern sich im Verlauf einer Ofenreise in Abhängigkeit von den chemischen und physikalischen Vorgängen im Ofen. Vorzugsweise im Temperaturbereich von etwa 400 bis etwa 700°C verkokt das Imprägnierpech und gleichzeitig entstehen Spaltgase. Während des Durchfahrens dieses Temperaturbereiches entstehen die größten Spaltgasmengen, der Ofen wird in diesem Zeitraum mit leichtem Überdruck (maximal +10Pa, bevorzugt bis +5Pa) betrieben.

Wie beschrieben, setzen sich die Spaltgase aus einem außerordentlich breiten Spektrum von Kohlenwasserstoffverbindungen zusammen. Entsprechend ihrem Molekulargewicht und den anderen Eigenschaften weisen diese Kohlenwasserstoffverbindungen sehr unterschiedliche Kondensations- und Verdampfungstemperaturen auf. Unter den Bedingungen des Graphitierungsofens nach Castner geraten diese Verbindungen in unterschiedliche Temperaturzonen. Nahe der zentralen heißen Seele aus pechimprägnierten Kohlenstoffkörpern liegen viele Verbindungen dort nur gasförmig vor. Der Gasdruck treibt die Verbindungen jedoch in die die Kohlenstoffkörper umgebende thermische Isolierung aus Kokskörnern. Von der heißen Seele des Ofens ausgehend fällt die Temperatur zum äußeren Rand der Isolierung hin ab. In diesen kühleren Partien der Isolierung kondensieren nun Bestandteile der Spaltgase.
Da die Temperaturverteilung im Ofen und speziell in der Isolierung nicht stationär ist, verbleiben die zunächst in den kühleren Partien kondensierten Substanzen nicht an diesen Stellen. Im Verlauf der Ofenreise steigt die Temperatur im Ofen allgemein und in der Isolierung zunächst an, fällt aber später auch wieder ab. Die Welle hoher Temperaturen wandert in der Isolierung nach außen und erreicht die in den zuerst kühleren Partien der Isolierung kondensierten Substanzen. Diese verdampfen erneut. Auf diese Weise gast die Koksschüttung über eine längere Zeitspanne aus. Aus diesem Grunde bleibt die Absaugung für den gesamten Ofen noch bis zu 24 Stunden nach Erreichen der Maximaltemperatur in der Ofenseele und dem dann folgenden Abschalten des Stromes durch die Kohlenstoffkörper im Einsatz.

Die Spaltgase sind brennbar. Brennbare Gase ergeben im Gemisch mit Sauerstoff bei einem Sauerstoffanteil über fünf Volumenprozent zündfähige, explosive Gasgemische. Mit geeigneten Sensoren wird daher der Sauerstoffgehalt der Ofenatmosphäre überwacht.

Der Sauerstoffgehalt wird auf zwei Wegen geregelt, um einen zu starken Anstieg zu verhindern: Entweder es werden inertisierende Gase in die Ofenatmosphäre eingespeist oder es wird der Unterdruck durch die Absaugung verringert und damit weniger Falschluft in den Ofen gezogen, bis weniger als vier Volumenprozent Sauerstoff in der Ofenatmosphäre nachgewiesen werden können.
Zu Beginn der Ofenreise ist der Sauerstoffgehalt im Ofen und unter der Abdeckung identisch mit dem der Umgebungsluft, liegt also bei etwa 21 Volumenprozent. Mit dem Anstieg der Temperaturen in der Ofenseele beginnen dort die ersten brennbaren Spaltgase zu entstehen. Um gerade während des Beginnes der Ofenreise keine zündfähigen Gasgemische entstehen zu lassen, werden während dieser Phase inertisierende Gase wie etwa Stickstoff und Kohlendioxid in den Ofen eingespült. Mit Hilfe von Sensoren wird überwacht, dass der Sauerstoffgehalt auch zu Beginn der Ofenreise unter 4 Volumenprozent bleibt.

In den Figuren wird die Erfindung beispielhaft weiter erläutert. Es zeigen:
- Fig. 1a:: eine Seitenansicht des Ofens,
- Fig. 1b:: eine Draufsicht auf den Ofen,
- Fig. 2:: eine räumliche Darstellung eines Wannenabschnittes des Ofens,
- Fig. 3a:: einen Schnitt entlang AA der Fig. 1a durch die Zusammenstellung oberer Wannenrand, Mineralwolle und unterer Rand der Abdeckung und
- Fig. 3b:: eine Detailansicht der Fig. 3a.

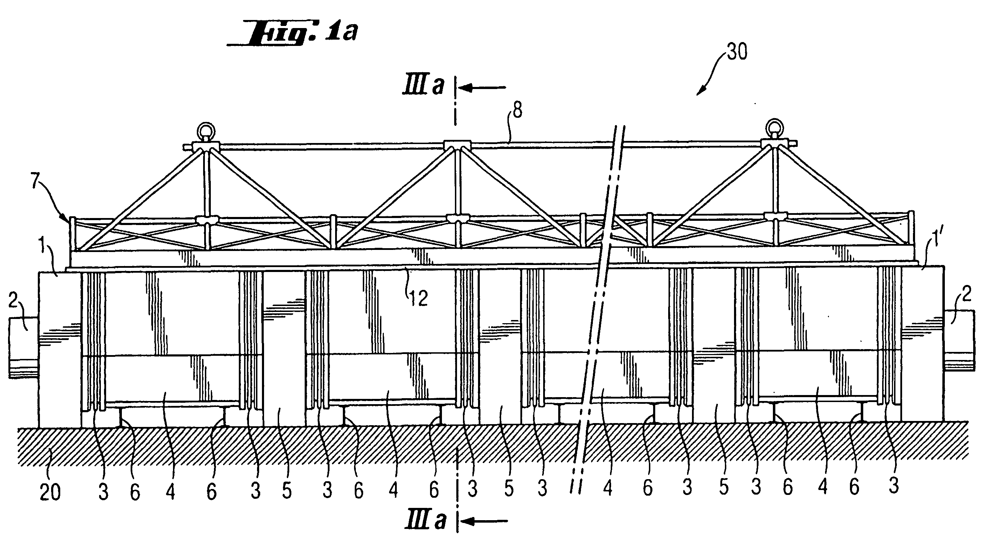

Die Seitenansicht des Ofens in Fig. 1a zeigt schematisch die in der Länge des Ofens 30 gegliederte Ofenwanne, die auf dem Hallenboden 20 steht. Der Ofen 30 beginnt auf der linken Seite mit dem Ofenkopf 1, der von einer Kontaktelektrode 2 durchsetzt wird. An den Ofenkopf 1 schließt sich ein Kompensator 3 aus Stahlblech an, der die Längenänderungen des Ofens während einer Ofenreise parallel zu seiner Längsachse kompensieren kann. Der Kompensator 3 ist mit dem Ofenkopf 1 einerseits und dem Stahlblechelement 4 andererseits fest und gasdicht entsprechend den Anforderungen an den Gesamtofen 30 verbunden. Der Stahlblechelement-Abschnitt 4 wird von Trägern 6 gehalten. An den ersten Stahlblechelement-Abschnitt 4 schließt sich ein weiterer Kompensator 3 an. Es folgt eine Betonrippe 5. Die Baugruppe Kompensator 3, Stahlblechelement 4, Kompensator 3 und Betonrippe 5 wiederholt sich entlang der Länge des Ofens mehrfach. Der Ofen wird auf der rechten Seite der Fig. 1a durch einen zweiten Ofenkopf 1' mit Kontaktelektrode 2 abgeschlossen. Der Ofen trägt auf seiner gesamten Länge eine Abdeckung 7, die von einem Fachwerk aus Streben 8 gehalten wird. Die Abdeckung 7 kann mit Hilfe eines Kranes leicht als Ganzes entnommen werden.

Fig. 1b zeigt die Draufsicht auf den Ofen ohne Abdeckung. Es sind zwei dicht nebeneinander befindliche Ofenwannen 9 und 10 erkennbar, die sich jeweils aus mehreren Baugruppen Kompensator 3, Stahlblechelement 4, Kompensator 3 und Betonrippe 5 zusammensetzen. Beide Ofenwannen enden links und rechts an den Ofenköpfen 1 und 1'. Die in den Innenraum des Ofens ragenden Kontaktelektroden 2 sind hier schematisch eingezeichnet.

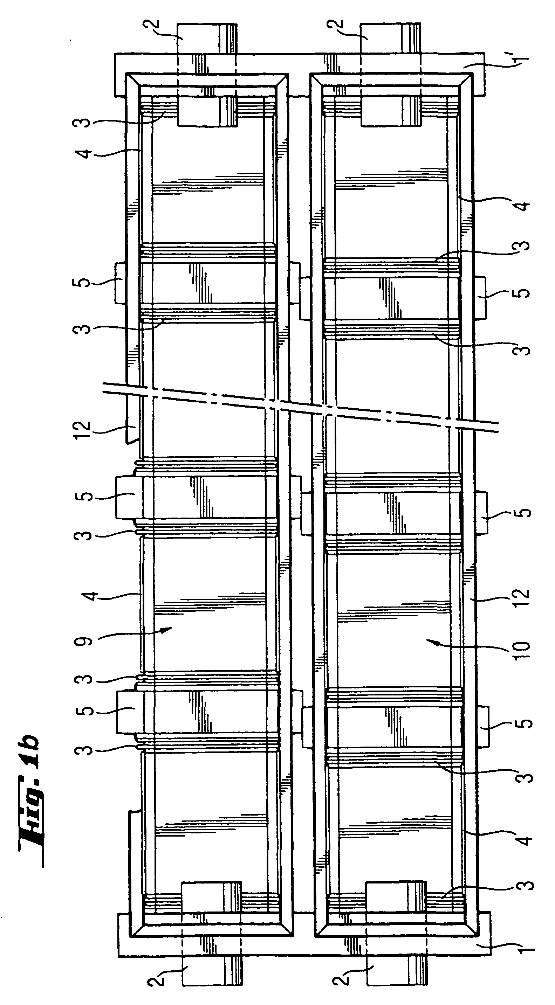

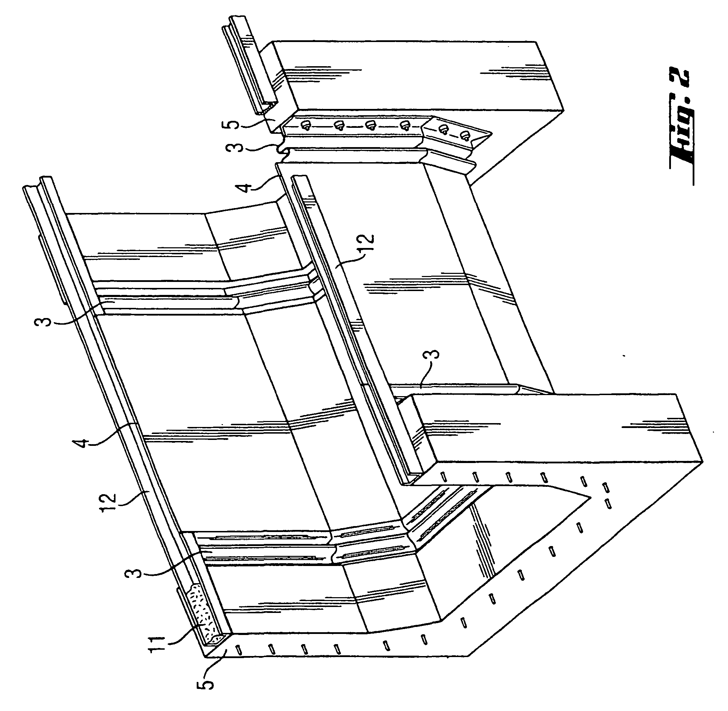

Fig. 2 zeigt eine räumliche Skizze einer Baugruppe bestehend aus Betonrippe 5, Kompensator 3, Stahlblechelement 4, Kompensator 3 und Betonrippe 5. Der obere Wannenrand 12 ist unterbrochen bzw. nicht durchgehend gezeichnet.

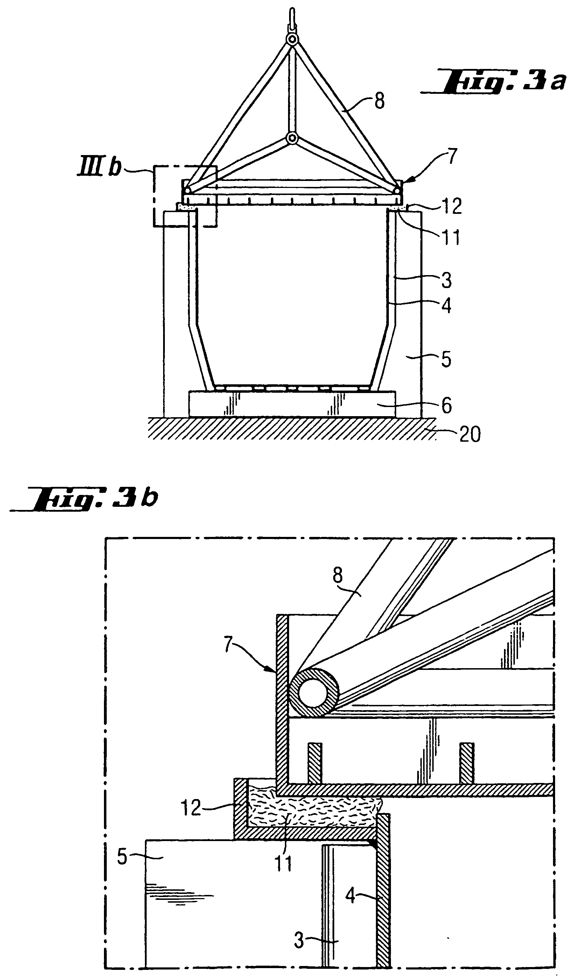

In Fig. 3a ist ein Schnitt entlang IIIa IIIa aus Fig. 1a quer durch ein Ofenbett bzw. quer durch ein Stahlblechelement 4 und die darüber befindliche Abdeckung 7 mit dem tragenden Fachwerk 8 dargestellt. Fig. 3b zeigt einen vergrößerten Ausschnitt aus Fig. 3a. Auf dem verbreiterten oberen Wannenrand 12 des Stahlblechelementes 4 ist Mineralwolle 11 ausgelegt. Die Abdeckung 7 lastet mit ihrem Gewicht auf der Mineralwolle 11, drückt sie zusammen und dichtet somit den Ofen in technisch ausreichendem Maße nach oben ab.

### Bezugszeichenliste

- 1: Ofenkopf
- 1': Ofenkopf
- 2: Kontaktelektrode
- 3: (Stahlblech-)Kompensator
- 4: Stahlblechelement
- 5: Betonrippe
- 6: Träger
- 7: Abdeckung
- 8: Fachwerk
- 9: Ofenbett
- 10: Ofenbett
- 11: Mineralwolle
- 12: Oberer Wannenrand
- 20: Hallenboden
- 30: Graphitierungsofen nach Castner

## Patentansprüche

1. Verfahren zum Nachverkoken und Graphitieren von mit Pech imprägnierten Kohlenstoffkörpern in einem Verfahrensschritt,
**dadurch gekennzeichnet, dass**
die imprägnierten Kohlenstoffkörper in einen Längsgraphitierungsofen nach Castner (30) unter Ausbildung mindestens eines zwischen Stromzu- und Stromabführelektroden (2) eingespannten Stranges so eingebaut werden,
dass sie rundum von einer thermischen Isolierschicht aus Koksschüttgut umgeben sind,
wobei die thermische Isolierschicht von einer weitgehend gasdichten Ofenwanne aufgenommen wird und wobei diese Wanne mit einer weitgehend gasdichten und gegenüber der Wanne gasdicht schließenden Abdeckung (7) versehen wird,
dass vor Beginn des Aufheizens der Kohlenstoffkörper der Sauerstoffgehalt in der Ofenatmosphäre auf einen Gehalt von weniger als 4 Volumenprozent gesenkt wird, dass nach einem vorgegebenen Programm in solcher Weise elektrischer Strom durch den Strang aus Kohlenstoffkörpern gleitet wird, dass diese zunehmend erhitzt werden und dabei die Stufe des Nachverkokens des Imprägnierpechs durchlaufen und zum Ende derselben Ofenreise Graphitierungstemperatur erreichen,
dass der Gasdruck innerhalb des Graphitierungsofens (30) so geregelt wird, dass er maximal +10 Pa bis - 40 Pa vom äußeren, den Ofen (30) umgebenden Luftdruck abweicht und
dass die aus den Kohlenstoffkörpern bzw. aus der Isolierschicht entweichenden Gase und Dämpfe über eine Absaugvorrichtung aus dem Ofen entfernt werden,
dass ferner die Stromzufuhr nach Erreichen der Graphitierungstemperatur unterbrochen wird und die nunmehr nachverkokten und graphitierten Kohlenstoffkörper nach ausreichendem Abkühlen, dem Beendigen des Austretens von Dämpfen aus der Isolierschüttung und dem Öffnen des Ofens ausgebaut werden.

2. Verfahren gemäß Anspruch 1,
**dadurch gekennzeichnet, dass**
der Sauerstoffgehalt in der Ofenatmosphäre vor dem Beginn des Aufheizens durch Spülen des Ofeninnenraumes mit Kohlendioxid und/oder Stickstoff gesenkt wird.

3. Verfahren gemäß Anspruch 1 oder 2,
**dadurch gekennzeichnet, dass**
der Sauerstoffgehalt in der Ofenatmosphäre durch Zumischen eines nicht brennbaren Gases mit einem Sauerstoffgehalt von unter einem Volumenprozent unter vier Volumenprozent gehalten wird.

4. Verfahren gemäß einem der Ansprüche 1 bis 3,
**dadurch gekennzeichnet, dass**
der Gasdruck im Ofeninnenraum gegenüber dem den Ofen umgebenden Luftdruck durch das Regeln entweder der abzusaugenden Gasmengen oder des Temperaturverlaufs eingestellt wird.

5. Verfahren gemäß einem der Ansprüche 1 bis 4,
**dadurch gekennzeichnet, dass**
der Gasdruck im Ofeninnenraum gegenüber dem den Ofen umgebenden Luftdruck durch das Regeln der abzusaugenden Gasmengen und des Temperaturverlaufs eingestellt wird.

6. Verfahren gemäß einem oder mehreren der Ansprüche 1 bis 5,
**dadurch gekennzeichnet, dass**
der Gasdruck im Ofeninnenraum so geregelt wird, dass dessen Abweichung gegenüber dem den Ofen umgebenden Luftdruck in einem bevorzugten Bereich zwischen + 5 Pa und - 25 Pa liegt.

7. Verfahren gemäß einem oder mehreren der Ansprüche 1 bis 6,
**dadurch gekennzeichnet, dass**
die den Ofenraum nach oben verschließende Abdeckung (7) vom Zeitpunkt des Abschaltens des elektrischen Stromes ab noch 24 Stunden lang auf dem Ofen (30) und während dieser Zeit die Vorrichtung zum Regeln des Ofeninnendruckes in Betrieb bleibt.

8. Weitgehend gasdicht abschließbare Ofenwanne für einen Längsgraphitierungsofen nach Castner (30) zum Durchführen eines Verfahrens gemäß einem oder mehreren der Ansprüche 1 bis 7, mit zwei den Wanneninnenraum stimseitig begrenzenden, aus keramischem Material bestehenden, in sich weitgehend gasdichten Ofenköpfen (1; 1'), die Elektroden (2) zum Zu- bzw. Abführen elektrischen Stromes aufweisen, und mit einer auf dem oberen Wannenrand (12) abgedichtet und gegenüber dem Wannenrand elektrisch isoliert ruhenden, den Ofeninnenraum abschließenden, abnehmbaren Abdeckhaube (7),
**dadurch gekennzeichnet, dass**
die zwischen den Ofenköpfen (1; 1') befindliche Ofenwanne aus miteinander und mit den Ofenköpfen (1; 1') lösbar aber weitgehend gasdicht verbundenen, abwechselnd aufeinander folgenden Stahlblechelementen und Betonrippen besteht,
wobei ein Stahlblechelement (4) erstens Wannenwände und einen breiten, weitgehend ebenen Wannenboden aufweist, der an seiner Unterseite auf dem Hallenboden (20) aufliegende Träger (6) oder Unterstützungen hat, und zweitens an beiden in Richtung der Ofenlängsachse zeigenden Enden mit einem aus gefaltetem oder gewelltem Stahlblech bestehenden Kompensator (3) gasdicht und fest verbunden ist, und
wobei die auf dem unter der Ofenwanne befindlichen Hallenboden (20) stehenden, temperaturbeständigen und elektrisch isolierenden Betonrippen (5) auf ihren Innenseiten je eine Kontur haben, die der Innenkontur der Stahlblechwannen entspricht,
und dass die Stahlblechelemente und Betonrippen an ihren der Abdeckhaube (7) zugekehrten oberen Rändern (12) mit Mineralwolle (11) gefüllte Nuten, Aussparungen oder Aufnahmen haben,
wobei die Mineralwolle (11) unter dem Gewicht der mit den unteren Kanten in die gefüllten Nuten eingreifenden, auf die Ofenwanne aufgesetzten Abdeckhaube (7) zusammengepresst ist, sodass während des thermischen Teils der Verfahrensdurchführung ein hinreichend gasdichter Abschluß zwischen der Ofenwanne und der Abdeckhaube (7) gewährleistet ist.

## Claims

1. Method for post-carbonizing and graphitizing pitch-impregnated carbon bodies in one method step,
**characterised in that**
the impregnated carbon bodies are installed in a Castner-type longitudinal graphitization furnace (30) forming at least one string stretched between current-supplying and current-returning electrodes (2),
**in that** they are surrounded on all sides by a thermal insulating layer of coke packing material,
with the thermal insulating layer being taken up by a largely gas-tight furnace tank and with this tank being provided with a largely gas-tight covering (7) that closes the tank in a gas-tight manner,
**in that** before starting to heat up the carbon bodies the oxygen content in the furnace atmosphere is lowered to a content of less than 4% by volume,
**in that** according to a predetermined program electrical current is conducted through the string of carbon bodies in such a way that these are heated increasingly and thereby run through the post-carbonization stage of the impregnating pitch and at the end of the same furnace life reach graphitization temperature,
**in that** the gas pressure is regulated inside the graphitization furnace (30) in such a way that it deviates up to a maximum of +10Pa to -40Pa from the external air pressure that surrounds the furnace (30), and **in that** the gases and vapours escaping from the carbon bodies and from the insulating layer are removed from the furnace by way of a suction device,
**in that**, furthermore, the current supply is interrupted after the graphitization temperature has been reached and the now post-carbonized and graphitized carbon bodies are removed, after sufficient cooling, the end of the emergence of vapours from the insulating packing and the opening of the furnace.

2. Method according to claim 1, **characterised in that** the oxygen content in the furnace atmosphere is lowered before the start of heating by flushing the interior space of the furnace with carbon dioxide and/or nitrogen.

3. Method according to claim 1 or 2, **characterised in that** the oxygen content in the furnace atmosphere is kept below four percent by volume by admixing a non-combustible gas with an oxygen content of below one percent by volume.

4. Method according to one of claims 1 to 3,
**characterised in that** the gas pressure in the interior space of the furnace is adjusted in relation to the air pressure surrounding the furnace by regulating either the quantities of gas to be removed by suction or the temperature course.

5. Method according to one of claims 1 to 4,
**characterised in that** the gas pressure in the interior space of the furnace is adjusted in relation to the air pressure surrounding the furnace by regulating the quantities of gas to be removed by suction and the temperature course.

6. Method according to one or more of claims 1 to 5,
**characterised in that** the gas pressure in the interior space of the furnace is regulated in such a way that its deviation from the air pressure surrounding the furnace lies in a preferred range between +5 Pa and -25 Pa.

7. Method according to one or more of claims 1 to 6, **characterised in that** the covering (7) that closes the furnace space towards the top remains on the furnace (30) for a further 24 hours from the time at which the electrical current is switched off and during this time the device for regulating the internal furnace pressure remains in operation.

8. Furnace tank, capable of being sealed off in a largely gas-tight manner, for a Castner-type longitudinal graphitization furnace (30) for carrying out a method according to one or more of claims 1 to 7, having two furnace ends (1; 1') which delimit the interior space of the tank on the end faces, are made of ceramic material and are largely gas-tight per se and have electrodes (2) for supplying or returning electrical current, and having a covering hood (7) that rests on the upper tank edge (12) in a sealed manner and so as to be electrically insulated in respect of the tank edge, seals off the interior space of the furnace and is removable,
**characterised in that** the furnace tank that is located between the furnace ends (1; 1') consists of steel-sheet elements and concrete ribs which are connected together and to the furnace ends (1; 1') in a detachable, but largely gas-tight manner and follow each other alternately, with one steel-sheet element (4) firstly having tank walls and a broad, largely planar tank base, which has on its lower side carriers (6) or supports which rest on the hall floor (20), and secondly being connected in a gas-tight and fixed manner at two ends, pointing in the direction of the longitudinal axis of the furnace, to a compensator (3) which consists of folded or corrugated steel sheet, and with the heat-resistant and electrically insulating concrete ribs (5) which stand on the hall floor (20) located underneath the furnace tank having a respective contour on their insides that corresponds to the inside contour of the steel-sheet tanks,
and **in that** the steel-sheet elements and concrete ribs have, at their upper edges (12) that face the covering hood (7), grooves, recesses or receivers that are filled with mineral wool (11),
with the mineral wool (11) being compressed under the weight of the covering hood (7) that engages into the filled grooves with its lower edges and is placed on the furnace tank so that during the thermal part of the execution of the method a sufficiently gas-tight seal is guaranteed between the furnace tank and the covering hood (7).

## Revendications

1. Procédé de postcokéfaction et de graphitation de corps de carbone, imprégnés de poix, en une seule opération,
**caractérisé en ce que**
- les corps de carbone imprégnés sont montés dans un four de graphitation longitudinale de type Castner (30) en formant au moins un faisceau encastré entre des électrodes d'amenée de courant et des électrodes d'évacuation de courant (2), de telle manière qu'ils sont entourês complètement d'une couche isolante thermique faite d'un remblai de coke,
- la couche isolante thermique étant prise par une cuve de four globalement étanche aux gaz, et pourvue d'un recouvrement (7) étanche aux gaz dans une large mesure et isolé vis-à-vis de la cuve de manière étanche aux gaz ;
- avant le début du réchauffement des corps de carbone, la teneur en oxygène dans l'atmosphère du four est abaissée à une valeur de moins de 4 % en volume ;
- suivant un programme prédéterminé, un courant électrique est dirigé à travers le faisceau de corps de carbone de telle manière que ceux-ci sont réchauffés de façon croissante et, de cette façon, traversent l'étape de la postcokéfaction de la poix d'imprégnation et atteignent, à la fin de la même campagne du four, la température de graphitation ;
- la pression de gaz à l'intérieur du four de graphitation (300) est réglée de telle manière qu'elle s'écarte au maximum de + 10 Pa à - 40 Pa de la pression d'air extérieur, entourant le four (30) ;
- les gaz et vapeurs s'échappant des corps de carbone (ou de la couche isolante) sont enlevés du four par l'intermédiaire d'un dispositif d'aspiration,
- et par ailleurs l'amenée de courant est interrompue une fois la température de graphitation atteinte, et les corps de carbone dès lors postcokéfiés et graphités sont démontés après un refroidissement suffisant, au terme de la sortie des vapeurs émanant du remblai d'isolation et après l'ouverture du four.

2. Procédé selon la revendication 1,
**caractérisé en ce que**
la teneur en oxygène dans l'atmosphère du four est abaissée, avant le début du réchauffement, par rinçage de l'intérieur du four, effectué à l'aide de diozyde de carbone et/ou d'azote.

3. Procédé selon la revendication 1 ou 2,
**caractérisé en ce que**
la teneur en oxygène dans l'atmosphère du four est maintenue en dessous de 4 % en volume grâce à l'addition d'un gaz non combustible ayant une teneur en oxygène inférieure à 1 % en volume.

4. Procédé selon l'une des revendications 1 à 3,
**caractérisé en ce que**
la pression de gaz à l'intérieur du four est ajustée vis-à vis de la pression d'air entourant le four en réglant soit les quantités de gaz à aspirer soit la variation de température.

5. Procédé selon l'une des revendications 1 à 4,
**caractérisé en ce que**
la pression de gaz à l'intérieur du four est ajustée vis-à-vis de la pression d'air entourant le four en réglant les quantités de gaz à aspirer et la variation de température.

6. Procédé selon l'une ou plusieurs des revendications 1 à 5,
**caractérisé en ce que**
la pression de gaz à l'intérieur du four est réglée de telle manière que son écart vis-à-vis de la pression d'air entourant le four se situe dans une gamme privilégiée comprise entre + 5 Pa et - 25 Pa.

7. Procédé selon l'une ou plusieurs des revendications 1 à 6,
**caractérisé en ce que**
le recouvrement (7) isolant l'intérieur du four vers le haut reste en place sur le four (30) encore durant 24 heures après l'instant de la coupure du courant électrique, et pendant ce temps le dispositif de réglage de la pression intérieure du four reste en fonctionnement.

8. Cuve de four, pouvait être isolée de manière étanche aux gaz dans une large mesure, pour un four de graphitation longitudinale de type Castiner (30), pour exécuter un procédé selon l'une ou plusieurs des revendications 1 à 7, comprenant deux têtes de four (1, 1') limitant l'intérieur de la cuve du côté de devant, constituées de matériau céramique et en soi étanches aux gaz dans une large mesure, lesquelles comportent des électrodes (2) pour l'amenée ou l'évacuation du courant électrique, et comprenant un capot de recouvrement (7), isolant l'intérieur du four et amovible, reposant de manière étanche sur le bord supérieur (12) de la cuve en étant isolé électriquement vis-à-vis du bord de la cuve,
**caractérisée en ce que**
la cuve de four se trouvant entre les têtes de four (1, l') se compose d'éléments en tôle d'acier et de nervures de béton, se succédant alternativement, reliés entre eux et avec les têtes de four (1, l') de façon amovible, mais étanches aux gaz dans une large mesure,
- un élément en tôle d'acier (4) comporte en premier lieu des parois de cuve et un fond de cuve large, dans une large mesure plat, lequel possède sur son côté inférieur des supports (6) ou appuis posés sur le plancher du hall (20), et en second lieu est relié, à ses deux extrémités orientées en direction de l'axe longitudinal du four, de manière fixe et étanche aux gaz, à un compensateur (3) fait de tôle d'acier pliée ou ondulée ;
- les nervures de béton (5), stables vis-à-vis de la température et électriquement isolantes, placées debout sur le plancher du hall (20) se trouvant sous la cuve du four, présentent respectivement sur leurs faces intérieures un contour qui correspond au contour intérieur des cuves en tôle d'acier,
- les éléments en tôle d'acier et les nervures de béton comportent, sur leurs bords (12) orientés vers le capot de recouvrement (7), des rainures, évidements ou logements remplis de laine minérale (11), et
- la laine minérale (11) se trouve comprimée sous le poids du capot de recouvrement (7) posé sur la cuve du four et en prise, avec ses arêtes inférieures, dans les rainures remplies, de sorte que, durant la partie thermique de l'exécution du procédé, un isolement suffisamment étanche aux gaz est assuré entre la cuve du four et le capot de recouvrement (7).
